(19) Europäisches Patentamt
European Patent Office
Office européen des brevets

(11) EP 1 975 951 A1

(12) **EUROPEAN PATENT APPLICATION**
published in accordance with Art. 158(3) EPC

(43) Date of publication:
**01.10.2008 Bulletin 2008/40**

(21) Application number: **06834524.8**

(22) Date of filing: **12.12.2006**

(51) Int Cl.:
***H01G 9/058*** *(2006.01)* ***H01M 4/02*** *(2006.01)*
***H01M 4/58*** *(2006.01)* ***H01M 4/62*** *(2006.01)*
***H01M 4/74*** *(2006.01)* ***H01M 10/40*** *(2006.01)*

(86) International application number:
**PCT/JP2006/324769**

(87) International publication number:
**WO 2007/074639 (05.07.2007 Gazette 2007/27)**

(84) Designated Contracting States:
**DE FR GB NL**

(30) Priority: **28.12.2005 JP 2005379741**

(71) Applicant: **Fuji Jukogyo Kabushiki Kaisha**
**Tokyo 160-8316 (JP)**

(72) Inventors:
- **ANDO, Nobuo**
  **Tokyo 160-8316 (JP)**
- **TASAKI, Shinichi**
  **Kanagawa, 234-0056 (JP)**
- **MATSUI, Kohei**
  **Fuchu-cho**
  **Aki-gun**
  **Hiroshima 735-0026 (JP)**
- **SHIRAKAMI, Atsuro**
  **Tokyo 160-8316 (JP)**
- **TAGUCHI, Hiromoto**
  **Kanagawa 223-0057 (JP)**
- **KOJIMA, Kenji**
  **Tokyo 160-8316 (JP)**

(74) Representative: **Popp, Eugen**
**MEISSNER, BOLTE & PARTNER**
**Postfach 86 06 24**
**81633 München (DE)**

(54) **LITHIUM ION CAPACITOR**

(57) A lithium ion capacitor is provided with a positive electrode containing a positive electrode active material capable of reversibly doping a lithium ion and/or an anion, a negative electrode containing a negative electrode active material capable of reversibly doping a lithium ion and a non-protonic organic solvent electrolytic solution of a lithium salt as an electrolytic solution. (a) A lithium ion is doped to a negative electrode and/or positive electrode so that a positive electrode potential when a positive electrode and a negative electrode are short-circuited may be 2.0 V or less. (b) A surface of the negative electrode is covered with a polymer.

EP 1 975 951 A1

## Description

Technical Field:

The present invention relates to a lithium ion capacitor that can retain excellent characteristics even when it is used under severe conditions such as vehicle installation.

Background Art:

In recent years, a so-called lithium ion secondary battery that uses a carbon material such as graphite in a negative electrode and a lithium-containing metal oxide such as $LiCoO_2$ in a positive electrode, being high in the capacity, as a potential electric storage device, is put into practical use as a main power supplymainly of a laptop computer or a portable telephone. The lithium ion secondary battery is a so-called rocking chair type battery where, after assemblage of the battery, a charge operation is carried out to supply lithium ion from the lithium-containing metal oxide as the positive electrode to the negative electrode, and, in a discharge operation, the lithium ion at the negative electrode is returned to the positive electrode. The lithium ion secondary battery is characterized by having a high voltage and a high capacity.

On the other hand, under a situation where the environmental problems come to the front, an electric storage device (a main power supply and an auxiliary power supply) for an electric car or hybrid car that substitutes a gasoline vehicle has been actively developed. Furthermore, until recently, as an automobile electric storage device, a lead battery has been used. However, since vehicular electrical installations and instruments are strengthened, from viewpoints of the energy density and output density, a new electric storage device is in demand.

As such a new electric storage device, the lithium ion secondary battery and an electric double layer capacitor are gathering attention. However, the lithium ion secondary battery, though high in the energy density, has problems in the output characteristics, the safety and the cycle lifetime. On the other hand, the electric double layer capacitor, which is utilized as a back-up power supply for a memory such as an IC and LSI, is smaller in the discharge capacity per one charge than the battery. However, the electric double layer capacitor is provided with such high output characteristics and maintenance-free characteristics that are not found in the lithium ion secondary battery as that the instantaneous charge and discharge characteristics are excellent and several tens thousands cycles of charge and discharge can be withstood.

Although the electric double layer capacitor has such advantages, the energy density of an existing and general electric double layer capacitor is substantially 3 to 4 Wh/l and is smaller by substantially two digits compared with that of the lithium ion secondary battery. When an electric car is considered, it is said that, in order to put into practical use, the energy density of 6 to 10 Wh/l is necessary, and, in order to popularize, the energydensityof 20 Wh/l is necessary.

As an electric storage device that responds to such applications that necessitate the high energy density and high output characteristics, recently, an electric storage device called as well as a hybrid capacitor that combines electric storage principles of a lithium ion secondary battery and an electric double layer capacitor is gathering attention. The hybrid capacitor usually uses a polarizable electrode in a positive electrode and a non-polarizable electrode in a negative electrode and is gathering attention as an electric storage device that combines high energy density of a battery and high output characteristics of an electric double layer capacitor. On the other hand, in the hybrid capacitor, a capacitor is proposed in which a negative electrode that can store and release lithium ion is brought into contact with metal lithium to allow storing and carrying (hereinafter, in some cases, referred to as doping) the lithium ion electrochemically in advance to lower a negative electrode potential, and, thereby, it is intended to heighten the withstand voltage and to make the energy density remarkably larger (Patent literatures Nos. 1 through 4).

In this kind of capacitor, high performance can be expected. However, when lithium ion is doped to a negative electrode, metal lithium has to be stuck to an entire negative electrode or it is possible to locally and partially dispose metal lithium in a cell to bring into contact with a negative electrode. However, there are problems in that the doping takes a very long time and cannot be uniformly applied over an entire negative electrode. It is considered difficult to put into practical use in a large and high capacity cell such as, in particular, a cylindrical device where electrodes are wound or a rectangular battery where a plurality of sheets of electrodes is laminated.

However, the problems were overcome at one stroke owing to an invention in that when a hole that penetrates through front and back of a negative electrode current collector and a positive electrode current collector that constitute a cell is disposed to allow lithium ion moving through the throughhole and simultaneously the metal lithium that is a supply source of the lithium ion and the negative electrode are short-circuited, only by disposing the metal lithium at an end of the cell, the lithium ion can be doped over an entire negative electrode in the cell (Patent literature 5). The lithium ion is usually doped to the negative electrode. However, it is disclosed in the patent literature 5 that even when the lithium ion is doped to the positive electrode together with the negative electrode or in place of the negative electrode, a situation is same.

Thus, even in a large cell such as a cylindrical electric storage device where electrodes are wound or a rectangular electric storage device where a plurality of sheets of electrodes is laminated, to an entire negative electrode in the device, in short time and uniformly over an entire negative electrode, the lithium ion can be doped to improve the withstand voltage and thereby to dramatically increase the energy density. As the result, a prospect of realizing a capacitor that has high output density that the electric double layer capacitor intrinsically has and high capacity is obtained.

However, in order to put such high capacity capacitors into practical use, further higher withstand voltage, capacity, energy density and output density are necessary. Furthermore, when the capacitor is put into practical use, it is demanded that even under severe service conditions such as vehicle installations where a temperature and humidity vary in a wide range and vibration is applied the performance can be stably maintained over a long term.

[Patent literature 1] JP-A-08-107048
[Patent literature 2] JP-A-09-055342
[Patent literature 3] JP-A-09-232190
[Patent literature 4] JP-A-11-297578
[Patent literature 5] WO98/033227

<u>Disclosure of the Invention</u>

The invention intends to provide, in a lithium ion capacitor where a positive electrode active material is a material that can reversibly dope lithium ion and/or anion, a negative electrode active material is a material that can reversibly dope lithium ion, and a negative electrode and/or a positive electrode is brought into contact electrochemically with a lithium ion supply source to dope the lithium ion in the negative electrode in advance, a lithium ion capacitor that has high withstand voltage, high capacity, low internal resistance and high energy density, and can stably retain excellent performance over a long term under severe service conditions such as vehicle installations.

In order to overcome the above problems, the inventors studied variously of factors for stably retaining excellent performances over a long term under severe service conditions such as vehicle installations of a lithium ion capacitor (hereinafter, in some cases, referred to as a capacitor cell) where lithium ion is doped in advance to a negative electrode and/or positive electrode and found that gas generation in a capacitor cell is one of large factors. When a gas is generated in a capacitor cell, the capacitor performances are gradually deteriorated to result in incapability of maintaining the stable performance. When a surface of a negative electrode containing a negative electrode active material of a capacitor cell is covered with a particular polymer, such a gas generation can be notably inhibited from occurring.

Thus, one or more embodiments of the invention provides a lithium ion capacitor below. That is,

(1) a lithium ion capacitor provided with a positive electrode containing a positive electrode active material capable of reversibly doping lithium ion and/or anion, a negative electrode containing a negative electrode active material capable of reversibly doping lithium ion and a non-protonic organic solvent electrolytic solution of a lithium salt as an electrolytic solution, wherein (a) the lithium ion is doped to the negative electrode and/or positive electrode so that a positive electrode potential after the positive electrode and negative electrode are short-circuited may be 2.0 V or less, and (b) a surface of the negative electrode is covered with a polymer.

(2) In the lithium ion capacitor described in the (1), the positive electrode and/or negative electrode, respectively, maybe provided with a current collector having a hole penetrating through between front and back surfaces and the negative electrode and/or positive electrode may come into contact electrochemically with a lithium ion supply source to dope the lithium ion to the negative electrode and/or positive electrode.

(3) In the lithium ion capacitor described in the (1) or (2), the negative electrode active material may have the capacitance per unit weight three times or more that of the positive electrode active material and a weight of the positive electrode active material may be larger than that of the negative electrode active material.

(4) In the lithium ion capacitor described in any one of (1) through (3), the polymer may swell to the electrolytic solution and the swelling rate may be in the range of 200 to 1000%.

(5) In the lithium ion capacitor described in any one of (1) through (4), the polymer may be covered by 0.5 to 10% by weight per weight of the negative electrode active material.

(6) In the lithium ion capacitor described in any one of (1) through (5), the polymer may be at least one kind selected from polyvinylidene fluoride, a polyvinylidene fluoride-hexafluoropropylene copolymer, polypropylene oxide and polyacrylonitrile.

(7) In the lithium ion capacitor described in any one of (1) through (6), the negative electrode active material may be graphite, non-graphitizable carbon or polyacene base organic semiconductor (PAS).

According to one or more embodiments of the invention, in a particularly high capacity lithium ion capacitor where lithium ion is doped in advance to a negative electrode and/or positive electrode, a lithium ion capacitor that, even when it is used over a long term under severe service conditions such as vehicle installations where a temperature and humidity vary in a wide range and vibration is applied, does not cause gas generation from a capacitor cell and can stably retain excellent performances over a long term can be provided. In the invention, a mechanism by which the gas is inhibited from generating when a surface of the negative electrode of the capacitor cell is covered with a particular polymer is supposed as follows.

In a lithium ion capacitor in which lithium ion is doped in advance to a negative electrode and/or positive electrode, in the process of doping the lithium ion to the negative electrode, on a surface of the negative electrode, an electrolytic solution is reductive decomposed to form a film. Furthermore, a byproduct generated at that time reacts with a surface of the positive electrode at the time of discharging to generate a gas containing mainly carbon dioxide. Accordingly, when a film is formed in advance on a surface of the negative electrode from a particular polymer, an electrolytic solution can be inhibited from decomposing on a surface of the negative electrode and thereby the gas can be inhibited from generating.

Other aspects and advantages of the invention will be apparent from the following description and the appended claims.

<u>Best Mode for Carrying Out the Invention:</u>

A lithium ion capacitor of exemplary embodiments of the invention includes a positive electrode, a negative electrode and a non-protonic organic electrolytic solution of a lithium salt as an electrolytic solution, a positive electrode active material being a material capable of reversibly doping lithium ion and/or anion, a negative electrode active material being a material capable of reversibly doping lithium ion. Here, the "positive electrode" is an electrode on a side therefrom a current flows out at the time of discharge and, as will be describedbelow, has a layer structure where a positive electrode active material is preferably bonded with an appropriate binder. Furthermore, the "negative electrode" is an electrode on a side therein the current flows at the time of discharge and, as will be described below, has a layer structure where a negative electrode activematerial is preferablyboundwith an appropriate binder.

The doping means inserting, carrying, adsorbing or storing and a phenomenon where lithium ion and/or anion enter an active material.

In the lithium ion capacitor of the exemplary embodiments of the invention, a positive electrode potential after a positive electrode and a negative electrode are short-circuited by doping lithium ion to the negative electrode and/or positive electrode is necessarily set at 2.0 V (relative to $Li/Li^+$, same below) or less. In a capacitor where the lithium ion is not doped to the negative electrode and/or positive electrode, both potentials of the positive electrode and negative electrode are 3 V and a positive electrode potential after the positive electrode and the negative electrode are short-circuited is 3 V. In the invention, that a positive electrode potential after the positive electrode and the negative electrode are short-circuited is 2.0 V or less means a case where a positive electrode potential obtained by either one method of (A) and (B) below is 2.0 V or less. That is, (A) a positive electrode potential is obtained when after lithium ion is doped, a positive electrode terminal and a negative electrode terminal of a capacitor cell are directly connected with a conductive wire and left there for 12 hrs or more, the short circuit is released, and a measurement is carried out within 0.5 to 1.5 hrs, and (B) a positive electrode potential is obtained when after a constant current discharge is applied over 12 hrs or more to 0 V by use of a charge and discharge test machine, a positive electrode terminal and a negative electrode terminal of a capacitor cell are connected with a conductive wire and left there for 12 hrs or more, the short circuit is released, and a measurement is carried out within 0.5 to 1.5 hrs.

Furthermore, that a positive electrode potential is 2.0 V or less after the short-circuiting means that the positive electrode potential becomes 2.0 V or less after short-circuiting in any one of states of, without restricting only to a state immediately after the lithium ion is doped, a charging state, a discharging state or the case of short-circuiting after charge and discharge are repeated.

The positive electrode potential becoming 2.0 V or less will be detailed below. As mentioned above, activated carbon and carbon materials usually have a potential of about 3 V ($Li/Li^+$). When a cell is assembled with activated charcoal for both positive electrode and negative electrode, since both potentials become about 3 V and a cell voltage becomes substantially 0 V, even after the short-circuiting, the positive electrode potential remains at about 3 V. Furthermore, also in the case of a so-called hybrid capacitor where activated carbon is used in a positive electrode and a carbon material such as graphite or non-graphitizable carbon that is used in a lithium ion secondary battery is used in a negative electrode, since a situation is same and both potentials become about 3 V and a cell voltage becomes about 0 V, even after the short-circuiting, the positive electrode potential remains at about 3 V. Though depending on a weight balance of the positive electrode and negative electrode, upon charging, a negative electrode potential shifts to the proximity of 0 V and a charging voltage can be made higher; accordingly, a capacitor having high voltage and high energy density can be obtained. In general, the upper limit of the charging voltage is determined as a voltage where the electrolytic

solution is not decomposed due to a rise in the positive electrode potential. Accordingly, when the positive electrode potential is set to the upper limit, by an amount of decrease in the negative electrode potential, the charging voltage can be heightened. However, in the above-mentioned hybrid capacitor where the positive electrode potential becomes substantially 3 V upon short-circuiting, when the upper limit potential of the positive electrode is set at for instance 4.0 V, since the positive electrode potential at the discharge is up to 3.0 V, a potential variation of the positive electrode is substantially 1.0 V. That is, a capacity of the positive electrode cannot be fully utilized. Furthermore, when the lithium ion is doped (charged) to or dedoped (discharged) from the negative electrode, it is known that in many cases an initial charge and discharge efficiency is low and the lithium ion that cannot be dedoped at the discharge is present. This is explained as a case where the lithium ion is consumed in decomposing the electrolytic solution on a surface of the negative electrode and a case

where the lithium ion is trapped in a structural defect of a carbon material. However, in this case, the charge and discharge efficiency of the negative electrode becomes lower than that of the positive electrode, when the cell is short-circuited after the charge and discharge is repeated, the positive electrode potential becomes higher than 3 V and thereby the serviceable capacity is further lowered. That is, when the positive electrode, though capable of discharging from 4.0 V to 2.0 V, can use only from 4.0 V to 3.0 V, only a half a serviceable capacity is used; accordingly, a high voltage can be obtained but a high capacity cannot be obtained.

In order to heighten the hybrid capacitor not only in the voltage and energy density but also in the capacity and energy density, the serviceable capacity of the positive electrode has to be improved.

When a positive electrode potential after the short-circuiting is lowered from 3.0 V, for that portion, the serviceable capacity is increased and high capacity can be obtained. In order to lower to 2.0 V or less, not only an amount charged by charge and discharge of the cell, separately, lithium ion is preferably doped from metal lithium to a negative electrode. Since the lithium ion is doped from other than the positive electrode and negative electrode, upon short-circuiting, an equilibrium potential is established between the positive electrode, negative electrode and metal lithium; accordingly, both the positive electrode potential and negative electrode potential become 3.0 V or less. The more abundant an amount of metal lithium becomes, the lower the equilibrium potential becomes. Since an equilibrium potential varies as the negative electrode active material and the positive electrode active material vary, in considering the characteristics of the negative electrode active material and positive electrode active material, the lithium ion doped to the negative electrode is necessarily controlled so that a positive electrode potential after the short-circuiting may be 2.0 V or less.

In the exemplary embodiments of the invention, when, in a capacitor cell, lithium ion is doped to the negative electrode and/or positive electrode in advance to make the positive electrode potential after short-circuiting of the positive electrode and negative electrode 2.0 V or less, the serviceable capacitance of the positive electrode becomes high; accordingly, high capacitance is obtained and large energy density can be obtained. The more abundant a supply amount of the lithium ion is, the lower the positive electrode potential when the positive electrode and negative electrode are short-circuited becomes and the higher the energy density is improved. In order to obtain further higher energy density, 1.5 V or less, in particular, 1 V or less is further preferred. When an amount of the lithium ion supplied to the positive electrode and/or negative electrode is slight, when the positive electrode and negative electrode are short-circuited, the positive electrode potential becomes higher than 2.0 V and thereby the energy density of the cell becomes smaller.

In the exemplary embodiments of the invention, the lithium ion may be doped to either one or both of the negative electrode and the positive electrode. However, in the case of for instance activated carbon being used in the positive electrode active material, when a dope amount of the lithium ion becomes too much and thereby the positive electrode potential becomes lower, in some cases, the lithium ion is irreversibly consumed to inconveniently deteriorate the capacitance of the cell. Accordingly, by considering the respective electrode active materials, the lithium ion is preferably doped to the negative electrode and the positive electrode so as not to cause these inconveniences. In the exemplary embodiments of the invention, since it is troublesome, from process viewpoint, to control a dope amount of the positive electrode and a dope amount of the negative electrode, the lithium ion is preferably doped to the negative electrode.

In the lithium ion capacitor of the exemplary embodiments of the invention, in particular, when the capacitance per weight of the negative electrode active material is three times or more the capacitance per weight of the positive electrode active material and weight of the positive electrode active material is set larger than weight of the negative electrode active material, a high voltage and high capacity capacitor can be obtained. Furthermore, simultaneously therewith, when a negative electrode having the capacitance per weight larger than the capacitance per weight of the positive electrode is used, without changing a variation amount of the potential of the negative electrode, weight of the negative electrode active material can be reduced; accordingly, weight of the positive electrode active material can be made larger to result in making the capacitance and the capacity of the cell larger.

The capacitance and the capacity of a capacitor cell (hereinafter, in some cases, simply referred to as a cell) are defined as shown below. The capacitance of a cell shows an amount of electricity (gradient of a discharge curve) flowing to a cell per voltage of the cell and has a unit of F (farad) . The capacitance per weight of a cell is shown by a quotient obtained by dividing the capacitance of the cell by a total weight of weight of the positive electrode active material

and weight of negative electrode active material filled in the cell and has a unit of F/g. Furthermore, the capacitance of the positive electrode or the negative electrode shows an amount of electricity (gradient of a discharge curve) flowing to a cell per voltage of the positive electrode or the negative electrode and has a unit of F. The capacitance per weight of the positive electrode or the negative electrode is shown by a quotient obtained by dividing the capacitance of the positive electrode or the negative electrode by weight of the positive electrode active material or negative electrode active material filled in the cell and has a unit of F/g.

Furthermore, the cell capacity is a product of difference of a discharge start voltage and a discharge end voltage of a cell, that is, a variation of voltage and the capacitance of the cell, and has a unit of C (Coulomb). However, since 1 C is an amount of electricity when a current of 1 A flows during 1 second, in the invention, the cell capacity is expressed in terms of mAh. The positive electrode capacity is a product of difference of the positive electrode potential at the discharge start and the positive electrode potential at the time of discharge end (variationof positive electrodepotential) and the capacitance of the positive electrode, and has a unit of C or mAh. Similarly, the negative electrode capacity is a product of difference of the negative electrode potential at the time of discharge start and the negative electrode potential at the time of discharge end (variation of negative electrode potential) and the capacitance of the negative electrode, and has a unit of C or mAh. The cell capacity, the positive electrode capacity and the negative electrode capacity coincide with each other.

In the lithium ion capacitor of the exemplary embodiments of the invention, means for doping the lithium ion to the negative electrode and/or positive electrode in advance are not particularly restricted. For instance, a lithium ion supply source such as metal lithium that can supply the lithium ion can be disposed as a lithium electrode in a capacitor cell. An amount of the lithium ion supply source (weight of metal lithium and the like) may be enough when predetermined capacity of the negative electrode can be obtained. In this case, the negative electrode and the lithium electrode may be brought into physical contact (short-circuiting) or the lithium ion may be electrochemically doped. The lithium ion supply source may be formed on a current collector of the lithium electrode, which is made of a conductive porous body. As the conductive porous body that becomes a current collector of the lithium electrode, a metallic porous body such as a stainless mesh that does not react with the lithium ion supply source can be used.

In a capacitor cell formed into a multi-layer structure to obtain large capacity, a positive electrode current collector and a negative electrode current collector that receive and deliver electricity from and to the positive electrode and the negative electrode, respectively, are provided. When such the positive electrode current collector and negative electrode current collector are used and a lithium electrode is disposed, it is preferred that the lithium electrode is disposed at a position that faces the negative electrode current collector to electrochemically dope the lithium ion to the negative electrode. In this case, as the positive electrode current collector and negative electrode current collector, a material provided with throughholes connecting front and back surfaces such as an expanded metal is used, and the lithium electrode is disposed faced to the negative electrode and/or positive electrode. The throughholes, without restricting to particular shape and the number thereof, can be disposed so that lithium ion in an electrolytic solution described below may move between front and back surfaces of the electrode without being interrupted by the electrode current collector.

In the lithium ion capacitor of the exemplary embodiments of the invention, even when the lithium electrode that dopes the negative electrode and/or positive electrode is locally disposed in the cell, the lithium ion can be uniformly doped. Accordingly, even in the case of a large capacity cell in which a positive electrode and a negative electrode are laminated or wound, when the lithium electrode is partially disposed at the outermost periphery or on the outermost side of the cell, the lithium ion can be smoothly and uniformly doped to the negative electrode.

As a material of the electrode current collector, various kinds of materials generally proposed for lithiumbase batteries canbeused. That is, in the positive electrode current collector, aluminum or stainless steel can be used, and, in the negative electrode current collector, stainless steel, copper or nickel can be used. Furthermore, a lithium ion supply source when the lithium ion is doped through an electrochemical contact with the lithium ion supply source disposed in the cell is a material that at least contains a lithium element and can supply the lithium ion like metal lithium or a lithium-aluminum alloy.

The positive electrode active material in the lithium ion capacitor of the exemplary embodiments of the invention is made of a material that can reversibly dope lithium ion and anion such as tetrafluoroborate. As such positive electrode active material, various kinds of materials can be used and activated carbon, a conductive polymer or a polyacene organic semiconductor (PAS) that is a pyrolysis product of an aromatic condensate polymer and has a polyacene skeleton structure where a ratio of numbers of hydrogen atoms and carbon atoms is in the range of 0.05 to 0.50 can be cited.

On the other hand, a negative electrode active material that constitutes a negative electrode in the lithium ion capacitor of the exemplary embodiments of the invention is formed of a material that can reversibly dope the lithium ion. As the negative electrode active material preferably used in the exemplary embodiments of the invention, carbon materials such as graphite, non-graphitizable carbon and graphitizable carbon or polyacene organic semiconductors (PAS) used as well as the positive electrode active material are preferred. As graphite, any of artificial graphite and natural graphite can be used. As the non-graphitizable carbon, phenol resin carbon and furan resin carbon can be cited. As the graphitizable carbon, petroleum cokes, coal pitch cokes and polyvinyl chloride carbon can be cited.

The PAS that is used as the positive electrode active material and/or negative electrode active material, having an amorphous structure, does not exhibit a structural change such as swelling and contraction at the doping and dedoping of the lithium ion to be excellent in the cycle characteristics. Furthermore, the PAS, having a molecular structure (higher structure) isotropic to the doping and dedoping of the lithium ion, is preferably excellent in the rapid charging and rapid discharge as well. The aromatic condensate polymer that is a precursor of the PAS is a condensate between an aromatic hydrocarbon compound and aldehyde. As the aromatic hydrocarbon compound, so-called phenols such as phenol, cresol and xylenol can be preferably used.

For instance, methylene/bisphenols, expressed by a formula below

[formula 1]

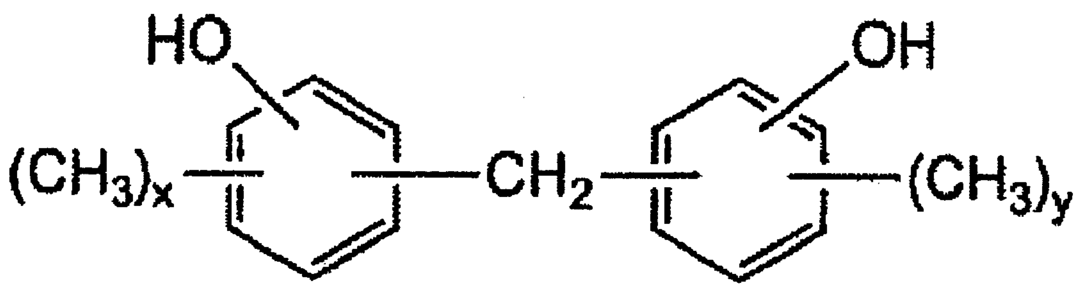

(here, x and y, respectively and independently, express 0, 1 or 2) or hydroxy/biphenyls or hydroxynaphthalenes can be used. Above all, phenols are preferred.

Furthermore, as the aromatic condensate polymer, a modified aromatic condensate polymer in which an aromatic hydrocarbon compound having the phenolic hydroxyl group is partially substituted with an aromatic hydrocarbon compound that does not have a phenolic hydroxyl group such as xylene, toluene or aniline such as a condensate of phenol, xylene and formaldehyde can be used as well. Still furthermore, a modified aromatic polymer that is substituted with melamine or urea can be used and a furan resin is preferred as well.

In the exemplary embodiments of the invention, the PAS is produced as follows. That is, when the aromatic condensate polymer is gradually heated up to an appropriate temperature in the range of 400 to 800°C under a non-oxidizing atmosphere (including vacuum atmosphere), an insoluble and infusible base material having a ratio of numbers of hydrogen atoms and carbon atoms (hereinafter, referred to as a H/C) in the range of 0.5 to 0.05 and preferably in the range of 0.35 to 0.10 can be obtained. The insoluble and infusible base material is gradually heated up to an appropriate temperature in the range of 350 to 800°C and preferably in the range of 400 to 750°C under a non-oxidizing atmosphere (including vacuum), followed by thoroughly washing with water or diluted hydrochloric acid, and thereby an insoluble and infusible base material that has above-mentioned H/C and the specific surface area due to the BET method of for instance 600 $m^2/g$ or more can be obtained as well.

The insoluble and infusible base material, according to the X-ray diffractometry (Cu Kα), has a main peak at a position of 24° or less by 2θ and, other than the main peak, another broad peak in the range of 41 through 46°. That is, the insoluble and infusible base material has a polyacene skeleton structure
where an aromatic polycyclic structure is appropriately developed and that has an amorphous structure; accordingly, the lithium ion can be stably doped.

In the exemplary embodiments of the invention, the positive electrode active material and negative electrode active material are made of particles of which 50% volume cumulative diameter (D50) is preferably in the range of 0.5 to 30 μm. In particular, the D50 is preferably in the range of 0.5 to 15 μm and particularly preferably in the range of 0.5 to 6 μm. Furthermore, the particles of the active material have the specific surface area desirably in the range of 0.1 to 2000 $m^2/g$, preferably in the range of 0.1 to 1000 $m^2/g$ and particularly preferably in the range of 0.1 to 600 $m^2/g$.

When the positive electrode and/or the negative electrode in the exemplary embodiments of the invention, respectively, are formed from the negative electrode active material and/or the positive electrode active material, as a process therefor, known processes can be used. That is, a powder of an electrode active material, a binder and, as needs arise, a conductive powder are dispersed in an aqueous or organic solvent to prepare a slurry, the slurry is coated on a current collector that is used as needs arise or the slurry may be formed in advance into a sheet, followed by sticking the sheet to a current collector preferably by use of a conductive adhesive. As the binder used here, for instance, rubber binders such as SBR and NBR; fluorine-containing resins such as polytetrafluoroethylene and polyvinylidene fluoride; and thermoplastic resins such as polypropylene, polyethylene and polyacrylate can be used. Above all, as the binder,

a (meth)acrylate polymer having a nitrile group is preferably used. Furthermore, as the (meth) acrylate polymer having a nitrile group, three polymers below, that is, (a) a copolymer of a (meth) acrylic acid ester and (meth)acrylonitrile, (b) a copolymer of a (meth)acrylic acid ester, vinyl monomer having a carboxyl group and (meth) acrylonitrile and (c) a graft polymer obtained by grafting (meth) acrylonitrile to a polymer containing (meth) acrylic acid ester are preferred.

In the exemplary embodiments of the invention, the binder is preferably used as an emulsion or a suspension by emulsifying or suspending in water. A content of the binder in the emulsion or suspension is, as a solid content, preferably in the range of 30 to 50% by weight and more preferably in the range of 35 to 45% by weight. A usage amount of the binder is, though different depending on the conductivities of particles of the active materials and a shape of the electrode, to 100 parts by weight of particles of the electrode active material, preferably in the range of 1 to 20% by weight and particularly preferably in the range of 2 to 10% by weight.

In the exemplary embodiments of the invention, when the positive electrode and the negative electrode, respectively, are formed from the positive electrode active material and the negative electrode active material, a conductive material is used as needs arise. As the conductive material, acetylene black, graphite and metal powder can be cited. The conductive material is, though different depending on the conductivities of the active materials and shapes of the electrodes, preferably used in the range of 2 to 40 parts by weight and particularly preferably in the range of 5 to 10 parts by weight to 100 parts by weight of the active material.

In the lithium ion capacitor of the exemplary embodiments of the invention, it is important that a surface of the negative electrode is covered with a polymer. In a lithium ion capacitor involving the exemplary embodiments of the invention, as the polymer that covers a surface of the negative electrode, various kinds of materials can be used. However, the polymer is preferably insoluble in the electrolytic solution but swelling therein. Accordingly, the polymer is preferably selected in accordance with a kind of an electrolytic solution being used. An extent of swelling, as the swelling rate, is preferably in the range of 200 to 1000% by weight and particularly preferably in the range of 400 to 700% by weight. This is considered that, in the case of the swelling rate being in the above range, in a capacitor cell, when a negative electrode covered by the polymer comes into contact with the electrolytic solution, an ion that constitutes the electrolytic solution can freely permeate through the polymer. The swelling rate here can be obtained as shown below.

A weight after a test piece of a polymer controlled to a thickness of 100 μm is dried is expressed by P1 and a weight after the test piece is immersed in an electrolytic solution being used at 25°C for 10 hr is expressed by P2. The swelling rate (%) can be obtained from a formula below.

$$\text{Swelling rate (\%)} = P2/P1 \times 100$$

Thus, in the exemplary embodiments of the invention, as a polymer that is impregnated in a separator, from the viewpoint of the swelling rate, at least one kind selected from a polyvinylidene fluoride-hexafluoropropylene copolymer, polypropylene oxide and polyacrylonitrile is preferred. Above all, a polyvinylidene fluoride-hexafluoropropylene copolymer is preferred.

When a polymer is coatedon a surface of a negative electrode, usually, a solution or dispersion in which the polymer is dissolved or dispersed in a medium is used. That is, a negative electrode active material is immersed for a predetermined time period in the solution or dispersion in which the polymer is dissolved or dispersed in a medium or the solution or dispersion is sprayed or coated on a surface of the negative electrode active material. The negative electrode covered by the solution or dispersion of the polymer by use of the above means is vacuum dried preferably at a temperature in the range of 150 to 250°C and preferably for 12 to 24 hr. In the invention, an amount of the polymer coated on a surface of the negative electrode is, per weight of the negative electrode active material, preferably in the range of 0.5 to 10% by weight and particularly preferably in the range of 3 to 8% by weight. When an impregnating amount is less than 0.5% by weight, a surface of the negative electrode is insufficiently covered to be low in the inhibition effect of gas generation. On the other hand, when the impregnating amount is larger than 10% by weight, while the gas can be effectively inhibited from generating, the internal resistance of the cell becomes unfavorably higher.

As the electrolytic solution in the lithium ion capacitor of the exemplary embodiments of the invention, various kinds thereof can be used. However, the electrolytic solution is used considering a polymer that covers a surface of the negative electrode. As an organic solvent that forms the electrolytic solution, non-protonic organic solvents such as ethylene carbonate, propylene carbonate, dimethyl carbonate, diethyl carbonate, γ-butyrolactone, acetonitrile, dimethoxyethane, tetrahydrofuran, dioxolane, methylene chloride and sulfolane can be cited. In the exemplary embodiments of the invention, at least two kinds of the non-protonic organic solvents may be mixed and used.

In the exemplary embodiments of the invention, above all, an organic solvent containing a mixture of cyclic carbonate and chain carbonate is preferred. As the cyclic carbonate, carbonates having 3 to 5 carbon atoms are preferred. As such cyclic carbonates, ethylene carbonate, propylene carbonate and butylene carbonate can be cited. Furthermore, as the chain carbonates, carbonates having 3 to 5 carbon atoms are preferred. As such chain carbonates, dimethyl

carbonate and diethyl carbonate can be cited. A mixing ratio of the cyclic carbonate and the chain carbonate is, by weight ratio, preferably in the range of 1/99 to 80/20 and particularly preferably in the range of 10/90 to 60/40.

In the exemplary embodiments of the invention, as the non-protonic organic solvent, among mixtures of cyclic carbonate and chain carbonate, a mixture of propylene carbonate, ethylene carbonate and diethyl carbonate is preferred in particular from the viewpoint of the endurance, low temperature characteristics and output characteristics. A weight ratio of propylene carbonate is, by weight ratio, preferably 25% or less to an entirety and a weight ratio of ethylene carbonate and diethyl carbonate is preferably in the range of 70/30 to 30/70. In particular, a weight ratio of propylene carbonate is, by weight ratio, preferably in the range of 5 to 15% to an entirety and a weight ratio of ethylene carbonate and diethyl carbonate is preferably in the range of 50/50 to 40/60.

In the exemplary embodiments of the invention, as the electrolyte that is dissolved in the organic solvent, all electrolytes that can produce lithium ion can be used. Examples of such electrolytes include lithium salts such as $LiClO_4$, $LiAsF_6$, $LiBF_4$, $LiPF_6$, $LiN(C_2F_5SO_2)_2$ and $LiN (CF_3SO_2)_2$. Above all, $LiPF_6$ and $LiN(C_2F_5SO_2)_2$ are preferred and $LiPF_6$ is particularly preferred. It is preferred that the electrolyte and solvent are mixed after sufficiently dewatered to form an electrolytic solution. A concentration of the electrolyte in the electrolytic solution, in order to lower the internal resistivity owing to the electrolytic solution, is preferably set at least at 0.1 mol/L or more and more preferably in the range of 0.5 to 1.5 mol/L.

The lithium ion capacitor of the exemplary embodiments of the invention is suitable for a large capacitance cell in particular such as a winding type cell in which a belt-like positive electrode and a belt-like negative electrode are wound through a separator, a laminate type cell obtained by laminating each of three or more planar positive electrodes and each of three or more planar negative electrodes through a separator or a film type cell where a laminated body obtained by laminating each of three or more planar positive electrodes and each of three or more planar negative electrodes through a separator is sealed in an exterior film. The cell structures all are known in WO00/07255, WO03/003395 and JP-A-2004-266091 and the capacitor cell involving the exemplary embodiments of the invention as well can be formed in a constitution same as that of existing cells.

In what follows, the invention will be specifically described with reference to examples. However, it goes without saying that the invention is not construed restricted to the

examples.

## EXAMPLE 1

### (Producing Method of Negative Electrode 1)

A phenol resin molded sheet having a thickness of 0.5 mm was put in a siliconit electric furnace and heated under a nitrogen atmosphere to 500°C at a temperature-up speed of 50°C/hr, followed by further heating to 660°C at a temperature-up speed of 10°C/hr, further followed by heat-treating, and thereby PAS was synthesized. Thus obtained PAS plate was pulverized by use of a disk mill and thereby a PAS powder was obtained. The PAS powder had the H/C ratio of 0.21.

In the next place, to 92 parts by weight of the PAS powder, 6 parts by weight of acetylene black powder, 5 parts by weight of an aqueous acrylate copolymer binder, 4 parts by weight of carboxylmethyl cellulose (CMC) and 200 parts by weight of ion-exchanged water were added, followed by thoroughly mixing by use of an agitator, and thereby a negative electrode slurry was obtained. The slurry was coated on one surface of a copper foil that has a thickness of 18 $\mu m$ so as to be substantially 7 $mg/cm^2$ as a solid content, followed by drying and pressing, and thereby a PAS negative electrode 1 was obtained.

### (Producing Method of Positive Electrode 1)

To 92 parts by weight of commercially available activated carbon powder having the specific surface area of 1950 $m^2/g$, 6 parts by weight of acetylene black powder, 7 parts by weight of an aqueous acrylate copolymer binder, 4 parts by weight of carboxylmethyl cellulose (CMC) and 200 parts by weight of ion-exchanged water were added, followed by thoroughly mixing by use of an agitator, and thereby a positive electrode slurry was obtained. The slurry was coated on one surface of a 20 $\mu m$ thick aluminum foil coated with a carbon base conductive paint so as to be substantially 7 $mg/cm^2$ as a solid content, followed by drying and pressing, and thereby a positive electrode 1 was obtained.

### (Measurementof Capacitance per Unit Weight of Positive Electrode 1)

From the positive electrode 1, a sheet having a size of $1.5 \times 2.0\ cm^2$ was cut and used as evaluation positive electrode. The positive electrode and metal lithium having a size of $1.5\ cm \times 2.0\ cm^2$ and a thickness of 200 $\mu m$ as a

counter electrode were assembled through a polyethylene nonwoven fabric having a thickness of 50 μm as a separator to prepare a simulated cell. As a reference electrode, metal lithium was used. As an electrolytic solution, a solution obtained by dissolving $LiPF_6$ in propylene carbonate at a concentration of 1 mol/l was used.
After charging to 3.6 V at a charging current of 1 mA, the constant voltage charging was applied, and, after a total charging time of 1 hr, the discharge was carried out to 2.5 V at 1 mA. From the discharging time between 3.5 V to 2.5 V, the capacitance per unit weight of the positive electrode 1 was obtained and found to be 92 F/g.

(Measurement of Capacitance per Unit Weight of Negative Electrode 1)

From the negative electrode 1, four sheets having a size of 1.5 × 2.0 $cm^2$ were cut and used as evaluation negative electrode. The negative electrode and metal lithium having a size of 1.5 × 2.0 $cm^2$ and a thickness of 200 μm as a counter electrode were assembled through a polyethylene nonwoven fabric having a thickness of 50 μm as a separator to prepare a simulated cell. As a reference electrode, metal lithium was used. As an electrolytic solution, a solution obtained by dissolving $LiPF_6$ in propylene carbonate at a concentration of 1 mol/l was used.
To weight of a negative electrode active material, at a charging current of 1mA, lithium ions equivalent to 280, 350, 400 and 500 mAh/g were doped, followed by discharging to 1.5 V at 1 mA. From a discharge time during which a potential variation of 0.2 V is caused from the negative electrode potential 1 min after the discharge start, the electrostatic capacitance per unit weight of the negative electrode 1 was obtained. Results are shown in Table 1.
[Table 1]

| Charging Amount (mAh/g) | 280 | 350 | 400 | 500 |
|---|---|---|---|---|
| Capacitance per unit weight of negative electrode 1 (F/g) | 308 | 463 | 661 | 758 |

Here, the charging amount is a value obtained by dividing a cumulative value of a charging current flowed to the negative electrode by weight of the negative electrode active material and has a unit of mAh/g.

(Producing Method of Negative Electrode 2)

On both surfaces of a copper expanded metal (produced by Nippon Metal Industry Co., Ltd.) that has a thickness of 32 μm (porosity: 54%), the negative electrode slurry 1 was formed by use of a die coater, followed by pressing, and thereby a negative electrode 2 having a thickness of an entire negative electrode (sum total of thicknesses of electrode layers on both surfaces of the negative electrode and a thickness of negative electrode current collector) of 149 μm was obtained.

(Producing Method of Positive Electrode 2)

On both surfaces of an aluminum expanded metal (produced by Nippon Metal Industry Co., Ltd.) that has a thickness of 35 μm (porosity: 50%), a non-aqueous carbon base conductive paint (trade name: EB-815, produced by Acheson (Japan) Ltd.) was coated by use of a spray coating method, followed by drying, and thereby a positive electrode current collector on which a conductive layer was formed was obtained. A total thickness (sum total of a thickness of a current collector and a thickness of a conductive layer) was 52 μm and the throughhole was substantially clogged by the conductive paint. The slurry of the positive electrode 1 was formed on both surfaces of the positive electrode current collector by use of a roll coater, followed by pressing, and thereby a positive electrode 2 having a total thickness (sum total of thicknesses of electrode layers on both surfaces of a positive electrode, thicknesses of conductive layers on both surfaces and a thickness of a positive electrode current collector) of 317 μm was obtained.

(Producing Method of Negative Electrodes 3 through 7)

By dissolving polyvinylidene fluoride-hexafluoropropylene copolymer (molar ratio of PVdF/HFP = 85/15, swelling rate: 650%) powder in ethanol, a 5% by weight solution was prepared. The PVdF-HFP solution was impregnated in the negative electrode 2, followed by vacuum drying at 150°C for 12 hr, and thereby a PVdF-HFP-containing negative electrode was obtained. By varying the impregnating time, contents of PVdF-HFP per weight of a negative electrode active material were controlled to 0.3% (negative electrode 3), 0.5% (negative electrode 4), 3% (negative electrode 5), 8% (negative electrode 6) and 13% (negative electrode 7) and thereby negative electrodes were obtained.

(Producing Method of Negative Electrodes 8 through 12)

By dissolving propylene oxide (PEO, swelling rate: 550%) powder in acetonitrile, a 5% by weight solution was prepared. The PEO solution was impregnated in the negative electrode 2, followed by vacuum drying at 150°C for 12 hr, and thereby a PEO-containing negative electrode was obtained. By varying the impregnating time, contents of PEO per weight of a negative electrode active material were controlled to 0.2% (negative electrode 8), 0.5% (negative electrode 9), 4% (negative electrode 10), 8% (negative electrode 11) and 15% (negative electrode 12) and thereby negative electrodes were obtained.

(Preparation of Electrode Laminated Units 1 through 11)

Eleven kinds of the negative electrodes 2 through 12 and the positive electrode 2, respectively, were cut to a size of $6.0 \times 7.5$ $cm^2$ (excluding a terminal welding portion). A cellulose/rayon mixed nonwoven fabric having a thickness of 35 $\mu$m was used as a separator. The terminal welding portions of the positive electrode current collector and negative electrode current collector were disposed so as to be on opposite sides to each other. The eleven kinds of the negative electrodes and the positive electrode 2, respectively, were laminated so that the number of surfaces through which the positive electrode and the negative electrode face may amount to 20 layers and the outermost electrode of the laminated electrodes may be a negative electrode. On the uppermost portion and lowermost portion, the separators were disposed, four sides were fastened with a tape, and the terminal welding portion of the positive electrode current collector (10 sheets) and the terminal welding portion of the negative electrode current collector (11 sheets), respectively, were welded by ultrasonic to an aluminum positive electrode terminal and a copper negative electrode terminal both having a width of 50 mm, a length of 50 mm and a thickness of 0.2 mm, and thereby electrode laminated units 1 through 11 were obtained. Incidentally, 10 sheets of the positive electrode and 11 sheets of the negative electrode were used. The weight of the positive electrode active material was 1.3 times the weight of the negative electrode active material.

(Preparation of Cells 1 through 11)

As a lithium electrode, one obtained by pressure bonding a metal lithium foil (thickness: 80 $\mu$m, $6.0 \times 7.5$ $cm^2$, equivalent to 200 mAh/g) to a stainless mesh having a thickness of 80 $\mu$m was used. One of the lithium electrode sheets was disposed on each of an upper portion and a bottom portion of an electrode laminated unit so as to completely face the negative electrode at the outermost portion, and thereby a three-electrode-laminated unit was obtained. The terminal welding portions (2 sheets) of the lithium electrode current collector were resistance welded to the negative electrode terminal welding portions.

The three-electrode-laminated unit was disposed inside of an exterior film that was deep drawn by 6.5 mm and covered with an exterior laminate film, followed by fusing three sides. After the fusing, as an electrolytic solution, a solution in which in a mixture solvent where ethylene carbonate, diethyl carbonate and propylene carbonate were mixed at a weight ratio of 3:4:1, $LiPF_6$ was dissolved at a concentration of 1 mol/l was impregnated under vacuum, followed by fusing a remaining one side, and thereby 11 cells of film type capacitor were assembled. The metal lithium disposed in the cell was equivalent to 400 mAh/gperweight of the negative electrode active material.

(Initial Evaluation of Cell)

When one cell was left for 20 days after assembling the cell and disassembled, the lithium metal was found completely disappeared in all. Accordingly, it was judged that lithium ion for obtaining electrostatic capacitance of 660 F/g or more per unit weight of the negative electrode active material was doped in advance. The electrostatic capacitance of the negative electrode amounts to 7.2 times the electrostatic capacitance of the positive electrode.

(Characteristics Evaluation of Cell)

One cell was charged under a constant current of 2000 mA to a cell voltage of 3.8 V, followed by applying a constant current-constant voltage charge where a constant voltage of 3.8 V is applied for 1 hr. In the next place, under a constant current of 200 mA, the cell was discharged to a cell voltage of 2.1 V. The cycle of 3.8 V-2.1 V was repeatedly applied and, in the tenth discharge, the cell capacity, energy density and AC-internal resistance at 1 kHz were evaluated. Results are shown in Table 2. Data were obtained by averaging over 10 cells. Furthermore, as the endurance test, in a thermostat set at 60°C, a voltage of 3.8 V was continuously applied for 1000 hrs, followed by leaving to cool to room temperature, further followed by checking the gas generation. The gas generation rates are shown in Table 2.

[Table 2]

| | Negative electrode No. | Initial capacity (mAh) | Energy density (Wh/l) | Internal resistance (mΩ) | Gas generation rate (%) |
|---|---|---|---|---|---|
| Cell 1 | 2 | 187 | 12.5 | 9.4 | 80 |
| Cell 2 | 3 | 185 | 12.4 | 9.7 | 40 |
| Cell 3 | 4 | 185 | 12.4 | 10.0 | 10 |
| Cell 4 | 5 | 183 | 12.3 | 11.1 | 0 |
| Cell 5 | 6 | 182 | 12.2 | 12.0 | 0 |
| Cell 6 | 7 | 180 | 12.1 | 14.7 | 0 |
| Cell 7 | 8 | 185 | 12.4 | 9.5 | 50 |
| Cell 8 | 9 | 185 | 12.4 | 9.9 | 10 |
| Cell 9 | 10 | 183 | 12.3 | 11.0 | 0 |
| Cell 10 | 11 | 182 | 12.2 | 11.8 | 0 |
| Cell 11 | 12 | 179 | 12.0 | 15.0 | 0 |

After the measurement was over, the positive electrode and negative electrode were short-circuited and a potential of the positive electrode was measured. In all cases, the potentials of the positive electrodes were substantially 0.95 V, that is, 2.0 V or less. Thus, when the lithium ion was doped in advance to the negative electrode and/or positive electrode so that the positive electrode potential when the positive electrode and negative electrode are short-circuited may be 2.0 V or less, a capacitor having high energy density was obtained.

Furthermore, cells that have a negative electrode of which surface is covered with a polymer exhibited tendency that the gas generation rate is low. However, when the content of the polymer is less than 0.5%, the gas cannot be effectively inhibited from generating. When the content of the polymer exceeds 10%, the gas can be effectively inhibited from generating.

Although, the invention was described in detail and with reference to particular embodiments, it is obvious for ones skilled in the art that, without deviating from the spirit and scope of the invention, various modifications and corrections can be applied.

The application is based upon a Japanese Patent Application No. 2005-379741, filed on December 28, 2005; the entire contents of which are incorporated herein by reference.

Industrial Applicability:

The lithium ion capacitor of the invention is very effective as a driving or auxiliary storage power supply for an electric car or a hybrid electric car. Furthermore, it can be preferably used as well as a driving storage power supply for an electric car or an electric wheelchair, an electric storage device of various kinds of energies such as solar energy or wind-power generation, or a storage power supply for domestic electric appliances.

## Claims

**1.** A lithium ion capacitor comprising:

a positive electrode including a positive electrode active material capable of reversibly doping either one or both of a lithium ion and an anion;
a negative electrode including a negative electrode active material capable of reversibly doping a lithium ion; and
a non-protonic organic solvent electrolytic solution of a lithium salt as an electrolytic solution;
wherein (a) the lithium ion is doped to either one or both of the negative electrode and positive electrode so that the positive electrode potential after the positive electrode and negative electrode are short-circuited is 2.0 V or less; and

(b) a surface of the negative electrode is covered with a polymer.

2. The lithium ion capacitor according to claim 1, wherein either one or both of the positive electrode and negative electrode, respectively, are provided with a current collector having a hole penetrating through between front and back surfaces; and
a lithium ion supply source comes into contact electrochemically with either one or both of the negative electrode and positive electrode to dope the lithium ion to either one or both of the negative electrode and positive electrode.

3. The lithium ion capacitor according to claim 1 or 2, wherein the negative electrode active material has capacitance per unit weight three times or more that of the positive electrode active material; and
a weight of the positive electrode active material is larger than that of the negative electrode active material.

4. The lithium ion capacitor according to any one of claims 1 through 3, wherein the polymer swells to the electrolytic solution; and
the swelling rate thereof is in the range of 200 to 1000%.

5. The lithium ion capacitor according to any one of claims 1 through 4, wherein the polymer is coated in the range of 0.5 to 10% by weight per unit weight of the negative electrode active material.

6. The lithium ion capacitor according to any one of claims 1 through 5, wherein the polymer is at least one kind selected from a polyvinylidene fluoride-hexafluoropropylene copolymer, polypropylene oxide and polyacrylonitrile.

7. The lithium ion capacitor according to any one of claims 1 through 6, wherein the negative electrode active material is graphite, non-graphitizable carbon or a polyacene organic semiconductor.

**INTERNATIONAL SEARCH REPORT**

International application No.
PCT/JP2006/324769

A. CLASSIFICATION OF SUBJECT MATTER
*H01G9/058*(2006.01)i, *H01M4/02*(2006.01)i, *H01M4/58*(2006.01)i, *H01M4/62*(2006.01)i, *H01M4/74*(2006.01)i, *H01M10/40*(2006.01)i

According to International Patent Classification (IPC) or to both national classification and IPC

B. FIELDS SEARCHED

Minimum documentation searched (classification system followed by classification symbols)
H01G9/058, H01M4/02, H01M4/58, H01M4/62, H01M4/74, H01M10/40

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 1998/033227 A1 (Kanebo, Ltd.), 30 July, 1998 (30.07.98), Page 3, line 24 to page 20, line 4 & EP 0964468 A1 & US 6461769 B1 | 1-7 |
| Y | JP 7-134989 A (Petoca, Ltd.), 23 May, 1995 (23.05.95), Par. Nos. [0006] to [0012], [0014], [0018] (Family: none) | 1-7 |
| Y | JP 2005-108835 A (Samsung SDI Co., Ltd.), 21 April, 2005 (21.04.05), Par. Nos. [0022] to [0025] & US 2005/0084760 A1 | 6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 March, 2007 (02.03.07) | 13 March, 2007 (13.03.07) |
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

International application No.
PCT/JP2006/324769

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2004/059672 A1 (Kanebo, Ltd.), 15 July, 2004 (15.07.04), Page 8, lines 2 to 16 & US 2006/0057433 A1 & EP 1577914 A1 | 3 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 8107048 A
- JP 9055342 A
- JP 9232190 A
- JP 11297578 A
- WO 98033227 A
- WO 0007255 A
- WO 03003395 A
- JP 2004266091 A
- JP 2005379741 A